# EUROPÄISCHE PATENTSCHRIFT

(11) **EP 3 628 797 B1**
(45) Veröffentlichungstag und Bekanntmachung des Hinweises auf die Patenterteilung: **26.05.2021**
(21) Anmeldenummer: 18196842.1
(22) Anmeldetag: 26.09.2018
(51) Int. Cl.: E04H 6/22, E04H 6/42, B60L 53/30

(54) **PARKVORRICHTUNG FÜR ELEKTROFAHRZEUGE**
PARKING DEVICE FOR ELECTRIC VEHICLES
DISPOSITIF DE STATIONNEMENT POUR VÉHICULES ÉLECTRIQUES

(43) Veröffentlichungstag der Anmeldung: 01.04.2020
(73) Patentinhaber: Siemens Aktiengesellschaft, 80333 München (DE)
(72) Erfinder: KUHN, Harald, 90491 Nürnberg (DE)

(56) Entgegenhaltungen:
- EP-A1- 2 372 046
- EP-A2- 2 330 262
- JP-A- 2014 020 106

## Beschreibung

Die Erfindung betrifft eine Parkvorrichtung aufweisend ein Parklager mit Stellplätzen für jeweils ein Fahrzeug, eine Transportvorrichtung, eine Ladevorrichtung für das Laden eines Elektrofahrzeugs und eine Ladesteuerung, wobei die Transportvorrichtung für das Transportieren der Fahrzeuge zwischen den Stellplätzen ausgebildet ist. Ferner betrifft die Erfindung ein Verfahren zum Betreiben einer derartigen Parkvorrichtung.

Die Verbreitung der Elektromobilität und damit die Erreichung der Klimaziele hängen stark mit der Entwicklung der Ladeinfrastruktur zusammen. Um dem Kunden die Möglichkeit zu geben, nahezu an jeder Stelle und zu jedem Zeitpunkt sein Elektromobil zu laden, werden große Anstrengungen unternommen, indem Lademöglichkeiten beim Arbeitgeber, beim Einkaufen, zu Hause, beim Parken, an Autobahnen, etc. geschaffen werden. Die Investitionen in den Ausbau dieser Infrastruktur sind immens und sollten, wenn möglich, optimiert werden. Daher müssen intelligente Lösungen bezüglich der Auswahl an Netzanschlussleistung, Anzahl der Ladesäulen und Leistung der Ladesäulen für die Infrastruktur-Projekte gefunden werden.

Insbesondere die Ladelösung an Orten, an denen viele Elektrofahrzeuge zusammenkommen, soll näher betrachtet werden. Dabei sind als Parkvorrichtung Einrichtungen gemeint, an denen eine Vielzahl von Fahrzeugen für eine gewisse Zeit abgestellt werden. Dazu zählen insbesondere Parkhäuser, Tiefgeragen, Parkflächen usw. Dabei kann es sich um öffentliche Parkvorrichtungen handeln, beispielsweise in Innenstädten, an Einkaufszentren, Flughäfen, Bahnhöfen oder auch um private Parkvorrichtungen beispielsweise in Wohngebieten oder bei Arbeitgebern.

Derzeit ist vorgesehen, Parkhäuser mit Ladeinfrastrukur zu bauen oder nachzurüsten, indem einzelne Ladesäulen mit einer relativen kleinen Ladeleistung an jeden einzelnen Parkplatz installiert werden. Die Installation der kleinen Ladeleistung hat eine lange Ladezeit zur Folge, womit nicht die Anforderung eines jeden Kunden erfüllt werden kann.

Insbesondere aus Japan (wenig Platz in den Innenstädten, teure Grundflächenpreise) sind automatisierte Parkhäuser bekannt. Die Autos werden nach der Authentifizierung des Fahrers in einer Art Einfuhrhalle abgestellt und dann automatisiert in einer Art Auto-Regallager zwischengelagert. Der Kunde kann nach wiederholter erfolgreicher Authentifizierung sein Fahrzeug aus dem Hochregallager auschecken. Das Dokument EP2330262A2 offenbart eine Parkvorrichtung, die die Merkmale des Oberbegriffes des Anspruchs 1 aufweist.

Der Erfindung liegt die Aufgabe zugrunde, eine Parkvorrichtung hinsichtlich der Lademöglichkeiten für Elektrofahrzeuge zu verbessern.

Diese Aufgabe wird durch eine Parkvorrichtung gemäß Anspruch 1 gelöst. Ferner wird diese Aufgabe durch ein Verfahren zum Betreiben einer derartigen Parkvorrichtung gemäß Anspruch 3 gelöst. Weitere Vorteilhafte Ausgestaltungen der Erfindung sind in den abhängigen Ansprüchen angegeben.

Der Erfindung liegt die Erkenntnis zugrunde, dass sich eine Parkvorrichtung, insbesondere ein Parkhaus, eine Tiefgarage oder eine Parkfläche, dadurch verbessern lässt, dass die Zuordnung der Fahrzeuge auf die Stellflächen gesteuert wird und die Bewegung der Fahrzeuge innerhalb der Parkvorrichtung zumindest teilweise automatisiert erfolgt. Die Fahrzeuge werden dabei innerhalb der Parkvorrichtung auf einer Vielzahl von Stellplätzen, d.h. mindestens zwei, oftmals aber auch mehr als 100 oder 1000, abgestellt. Diese Stellplätze können als eine Vielzahl bereits bekannter Stellflächen in einem Parkhaus, Tiefgarage oder Parkplatz ausgebildet sind. Dabei werden die Fahrzeuge mit Hilfe eines oder mehrerer Parkroboter zu der Stellfläche bewegt. Dieser Parkroboter ist damit eine Transportvorrichtung, die das Fahrzeug transportiert, ohne den Fahrzeugantrieb zu nutzen. Alternativ können die Stellplätze auch als eine Art Regallager, wie beispielsweise ein Hochregallager, ausgebildet sein, in der die Fahrzeuge mit Hilfe einer Transportvorrichtung bewegt und abgestellt werden.

Dabei steuert die Ladesteuerung die Verteilung der Elektrofahrzeuge auf die einzelnen Stellplätze. Nachdem eine Ladeanforderung für das Elektrofahrzeug der Ladesteuerung übermittelt wurde, wird das Fahrzeug zu einem Stellplatz transportiert. Dabei kann das Fahrzeug direkt zu einem Stellplatz transportiert werden, an dem das Laden mittels der Ladevorrichtung stattfindet. Ebenso ist es möglich, beispielsweise wenn die vorhandenen Ladevorrichtungen bereits durch andere Elektrofahrzeuge besetzt sind, das Elektrofahrzeug zunächst zu einem Stellplatz ohne Ladevorrichtung zu transportieren und erst bei Freiwerden eines Stellplatzes mit Ladevorrichtung das Elektrofahrzeug dorthin zu transportieren. Damit ist es nicht mehr erforderlich, jeden Stellplatz in der Parkvorrichtung mit einer Ladevorrichtung auszustatten. Bei gegebener elektrischer Leistung für die Ladevorrichtungen können dann die vorhandenen Ladevorrichtungen leistungsfähiger dimensioniert werden, als wenn jeder Stellplatz mit einer Ladevorrichtung ausgestattet wäre. Es ist davon auszugehen, dass in einer Parkvorrichtung immer Elektrofahrzeuge vorhanden sind, die nicht geladen werden müssen. Dies kann daran liegen, dass das Laden bereits erfolgreich abgeschlossen ist oder dass einfach keine Anforderung für das Laden vorliegt, weil es vom Fahrzeugführer oder Fahrzeugbesitzer nicht gewünscht wird. Ebenso ist es möglich, dass die Parkvorrichtung auch von Fahrzeugen genutzt wird, die von der Ladevorrichtung gar nicht geladen werden können, beispielsweise weil diese gar keinen Elektroantrieb, sondern eine Verbrennungsmaschine aufweisen. Somit ist davon auszugehen, dass es immer eine Menge an Fahrzeugen gibt, die keine Ladung benötigen. Diese können dann auf Stellplätzen ohne Ladevorrichtung transportiert werden.

Da es mit dieser Lösung möglich ist, eine Vielzahl von Elektrofahrzeuge optimal zu laden, ohne an jedem Stellplatz eine Ladevorrichtung vorzusehen, eignet sich diese Lösung auch insbesondere für die Nachrüstung von bestehenden Parkvorrichtungen, da nur ein Teil der Stellplätze mit Ladevorrichtungen ausgestattet sind und trotzdem alle in der Parkvorrichtung befindlichen Fahrzeuge geladen werden können indem sie automatisiert, von der Ladesteuerung gesteuert, zu einem Stellplatz mit Ladevorrichtung transportiert werden können.

Die Fahrzeuge sind innerhalb der Parkvorrichtung durch die Transportvorrichtung mobil und können nun aus dem Regallager insbesondere in einer optimierten Reihenfolge zu den Stellplätzen mit Ladevorrichtungen automatisiert bewegt werden, um dort aufgeladen zu werden.

Die Kommunikation und/oder die Authentifizierung des Kunden/Fahrers mit dem Ladesteuerung kann beispielsweise über eine Smartphone-App (Infos für den Kunden, Ladezustand der Batterie, Abholzeitpunkt, bzw. Korrektur des Abholzeitpunktes, etc.) erfolgen.

Der Ladevorgang kann dabei automatisiert durchgeführt werden. Entweder durch Roboter, die die elektrischen Kontakte der Ladevorrichtung und des Elektrofahrzeugs miteinander verbinden. Alternativ ist es auch möglich, die Aufladung kontaktlos, beispielsweise über ein induktives Laden, durchzuführen.

Zum Beispiel ist ein Anwendungsfall vorstellbar, dass ein Kurzparker mit relativ leerer Batterie nach 45 Minuten wieder mit einer vollen Batterie das Parkhaus verlassen möchte. Gleichzeitig kann es sein, dass ein Langzeitparker mit einer relativ vollen Batterie für seine komplette Parkzeit eine Ladestellplatz blockieren würde, obwohl er diese nicht nutzt, da die Batterie schon nach kurzer Zeit ihren maximalen oder optimalen Ladestand erreicht hat. Die Ladevorrichtung würde ohne dem erfindungsgemäßen Gedanken, die Elektrofahrzeuge nur für die benötigte Zeit zu einer Ladevorrichtung zu transportieren, nicht optimal genutzt, da sie häufig im "stand-by" mode arbeitet. Die Investition in die Ladevorrichtungen wird sich durch Anwendung der Erfindung also verhältnismäßig früh rentieren, da sie die vorhandenen Ladevorrichtungen optimal ausnutzt. Gleichzeitig ist es nur erforderlich, einige wenige Stellplätze mit einer Ladevorrichtung auszustatten und damit Investitionskosten zu sparen.

Bei einer vorteilhaften Ausgestaltung der Erfindung wird nach Beendigung des Ladevorgangs das Elektrofahrzeug mittels der Transportvorrichtung auf einen weiteren Stellplatz der Stellplätze transportiert, wobei der weitere Stellplatz als Lagerplatz ausgebildet ist. Dieser Lagerplatz ist mit keiner Ladevorrichtung versehen und somit günstig bei der Erstellung der Parkvorrichtung zu realisieren. Durch den Transport nach Abschluss der Ladung auf einen Stellplatz ohne Ladevorrichtung können die Stellplätze mit Ladevorrichtung effektiver für das Laden von Elektrofahrzeugen genutzt werden. Durch den Transport von geladenen Fahrzeugen weg von den Ladevorrichtungen benötigt die Parkvorrichtung nur eine beschränkte Anzahl an Ladevorrichtungen, die dann eine hohe Auslastung haben. Durch die geringere Anzahl an Ladevorrichtungen können diese bei vorgegebener Gesamtladeleistung für die Parkvorrichtung leistungsfähiger dimensioniert werden. Dies erlaubt gleichzeitig ein schnelleres Laden der in der Parkvorrichtung vorhandenen Elektrofahrzeuge.

Bei einer weiteren vorteilhaften Ausgestaltung der Erfindung wird bei Übermittlung der Ladeanforderung eine Information über den Ladezustand und/oder der voraussichtlichen Parkdauer und/oder zu übertragende Energiemenge übermittelt. Aus diesen Informationen bzw. aus einem Teil dieser Informationen kann der Ladevorgang für das zu ladende Elektrofahrzeug optimiert werden. Dem Kunden/Fahrer wird die Möglichkeit gegeben, eine festzulegende Energiemenge zu bestellen, die von der Ladevorrichtung an das Fahrzeug übertragen wird. Diese kann auch von der Ladesteuerung dem Kunden/Fahrer vorgeschlagen werden. Dabei können Daten über andere Fahrzeuge, die geladen werden sollen und somit die Verfügbarkeit der Ladevorrichtungen einschränken können, berücksichtigt werden. Aus dem Ladezustand des Fahrzeugs kann darüber hinaus berechnet werden, wie viel Energie das Elektrofahrzeug überhaupt aufnehmen kann. Darüber hinaus kann die Aufladedauer berechnet werden bis der Energiespeicher des Elektrofahrzeugs vollständig geladen ist oder die gewünschte Energiemenge übertragen ist. Bei gleichzeitig vorhandener Information über die voraussichtliche Parkdauer kann bestimmt werden, wann und mit welcher Leistung der Ladevorgang gestartet wird. Übersteigt die voraussichtliche Parkdauer die errechnete Aufladedauer kann der Freiheitsgrad genutzt werden, zunächst andere Elektrofahrzeuge zu laden. Mit anderen Worten kann der Freiheitsgrad dazu genutzt werden, den Aufladevorgang aller oder zumindest eines Teils der für das Laden vorgesehenen Elektrofahrzeuge zu optimieren. Dabei kann beispielsweise die Information genutzt werden, um die Reihenfolge der Fahrzeuge für die Aufladung festzulegen.

Die voraussichtliche Parkdauer kann vom Kunden/Fahrer angegeben werden. Alternativ ist es möglich, eine statistische Größe anzunehmen, die sich aus der Parkdauer der Fahrzeuge in der Parkvorrichtung aus der Vergangenheit ergibt. Ebenso ist es möglich, insbesondere wenn ein Fahrzeug wiederholt in der Parkvorrichtung abgestellt wird, aus den Werten der Parkdauer der Vergangenheit für das betreffende Elektrofahrzeug auf die voraussichtliche Parkdauer zu schließen.

Erfindungsgemäß umfasst die Parkvorrichtung eine weitere Ladevorrichtungen, wobei die weitere Ladevorrichtung in der Umgebung eines zweiten Stellplatzes der Stellplätze derart angeordnet ist, dass ein auf dem zweiten Stellplatz befindliches Elektrofahrzeug mittels der weiteren Ladevorrichtung aufladbar ist, wobei sich die Leistungsfähigkeit der Ladevorrichtung und die Leistungsfähigkeit der weiteren Ladevorrichtung unterscheiden, wobei abhängig von der Information über den Ladezustand und/oder der voraussichtlichen Parkdauer und/oder der zu übertragenden Energiemenge ermittelt wird, zu welchem Stellplatz das Elektrofahrzeug mittels der Transportvorrichtung transportiert wird. Sind in der Parkvorrichtung Ladevorrichtungen mit unterschiedlicher Leistungsfähigkeit, d.h. unterschiedlich hoher Ladeleistung oder Ladeströmen, verfügbar, so kann in Abhängigkeit der zur Verfügung gestellten Informationen durch die Ladesteuerung festgelegt werden, an welcher Ladevorrichtung das betreffende Elektrofahrzeug geladen wird. Dabei können beispielsweise Elektrofahrzeuge mit einem größeren Ladebedarf, da beispielsweise der Energiespeicher schon weiter entladen ist oder die angeforderte Energiemenge größer ist, oder einer kürzeren voraussichtlichen Parkdauer mit einer Ladevorrichtung mit größerer Leistung geladen werden, um das Fahrzeug in der zur Verfügung stehenden voraussichtlichen Parkdauer laden zu können. Damit kann ein guter Kompromiss gefunden werden, um eine Infrastruktur zu schaffen, die sowohl ein schnelles Laden für einen hohen Energiebedarf als auch das gleichzeitige Laden für eine Vielzahl von Elektrofahrzeugen sicherstellt.

Bei einer weiteren vorteilhaften Ausgestaltung der Erfindung hat eine erste Anzahl an Elektrofahrzeugen jeweils eine Ladeanforderung an die Ladesteuerung übermittelt, wobei die erste Anzahl größer ist als die Anzahl der Ladevorrichtungen der Parkvorrichtung, wobei in Abhängigkeit von der Information über den Ladezustand und/oder der voraussichtlichen Parkdauer und/oder der zu übertragenden Energiemenge und/oder aus der Information über den Zeitpunkt der Übermittlung der Ladeanforderung eine Reihenfolge für die Elektrofahrzeuge, die jeweils eine Ladeanforderung an die Ladesteuerung übermittelt haben, ermittelt wird, in der die Elektrofahrzeuge geladen werden. Aus den Informationen, die neben der Ladeanforderung durch die einzelnen Fahrzeuge an die Ladesteuerung übertragen werden, kann eine Reihenfolge der Elektrofahrzeuge für die Ladung festgelegt werden. Dabei kann für jede Ladevorrichtung eine Reihenfolge der Elektrofahrzeuge festgelegt werden, in welcher die Elektrofahrzeuge mittels der Transportvorrichtung zu dem entsprechenden Stellplatz mit Ladevorrichtung transportiert und an der Ladevorrichtung geladen werden. Neben den übermittelten Daten kann auch der Zeitpunkt des Eintreffens der Ladeanforderung mit ausgewertet werden. Somit kann ein Elektrofahrzeug, das sich früher zum Laden anmeldet, auch früher geladen werden. Das entspricht dem Prinzip einer Warteschlange und erhöht die Akzeptanz bei Kunden/Fahrern.

Bei einer weiteren vorteilhaften Ausgestaltung der Erfindung wird in Abhängigkeit von der Information über den Ladezustand und/oder der voraussichtlichen Parkdauer und/oder der zu übertragenden Energiemenge und/oder aus der Information über den Zeitpunkt der Übermittlung der Ladeanforderung die Ladedauer für die jeweiligen Elektrofahrzeuge ermittelt. Ist neben der Reihenfolge der Elektrofahrzeuge auch die Ladedauer der einzelnen Elektrofahrzeuge bekannt, kann ein Zeitplan für die Ladung aufgestellt werden. Damit kann jedem Kunden/Fahrer der Zeitpunkt für den Abschluss der Ladung genannt werden. Er kann sich somit darauf einstellen, wann er sein Fahrzeug im gewünschten Zustand, d.h. geladen, wieder abholen kann. Gleichzeitig ist es möglich, die einzelnen Aufladungen der Fahrzeuge zu planen und nebenbei auch, vorzugsweise in freien Zeiträumen, in denen keine Ladung stattfindet, Wartungsarbeiten an der Transportvorrichtung und/oder der Ladevorrichtung durchzuführen.

Bei einer weiteren vorteilhaften Ausgestaltung der Erfindung wird die Ermittlung der Reihenfolge und/oder die Ermittlung der Ladedauer bei Eintreffen einer weiteren Ladeanforderung neu durchgeführt. Es hat sich als sinnvoll erwiesen, bei einer neu eintreffenden Ladeanforderung, die Reihenfolge neu zu planen. Somit können dringende Ladeanforderungen berücksichtigt werden, bei denen eine Aufladung kurzfristig erfolgt. Dies kann dazu genutzt werden, für kurzfristige Ladungen höhere Preise zu verlangen, so dass die Parkvorrichtung für den Betreiber wirtschaftlicher betrieben werden kann.

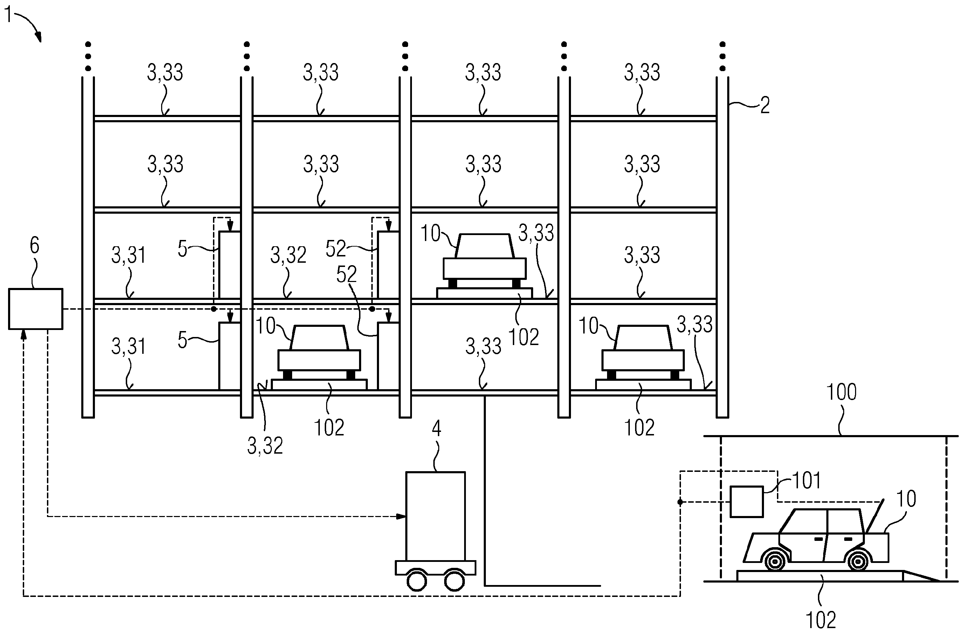

Im Folgenden wird die Erfindung anhand des in der Figur dargestellten Ausführungsbeispiels näher beschreiben und erläutert. Es zeigt
- FIG: ein Ausführungsbeispiel einer Parkvorrichtung.

Die FIG zeigt eine Parkvorrichtung 1. Die Parkvorrichtung 1 weist ein Parklager 2 auf. Das Parklager 2 ist in diesem Ausführungsbeispiel als Art Regallager, auch als Hochregallager bezeichnet, ausgebildet. Dieses Parklager 2 weist eine Vielzahl von Stellplätzen 3, 31, 32, 33 auf. Ein erster Stellplatz 31 und ein zweiter Stellplatz 32 weisen dabei eine Ladevorrichtung 5 bzw. eine weitere Ladevorrichtung 52 auf. Um eine unterschiedliche Ladeleistung und damit unterschiedlicher Ladedauer realisieren zu können, ist es vorteilhaft, wenn sich die Leistungsfähigkeit der Ladevorrichtung 5 und der weiteren Ladevorrichtung 52 unterscheiden. Die Leistungsfähigkeit wird über die maximale Ladeleistung der Ladevorrichtung 5, 52 angegeben. Darüber hinaus können auch noch weitere, hier nicht dargestellte Ladevorrichtungen 5, 52 in der Parkvorrichtung 1 vorhanden sein. Die Ladevorrichtungen 5, 52 werden über eine Ladesteuerung 6 gesteuert.

In der Parkvorrichtung befinden sich Elektrofahrzeuge 10. Diese werden von dem Fahrer in die Übergabestelle 100 gefahren. Von dort können sie mit einer Transportvorrichtung 4 fahrerlos und ohne Nutzung des Fahrzeugantriebs auf einen der Stellplätze 3, 31, 32, 33 transportiert werden. Zur Erleichterung des Transports können dabei die Elektrofahrzeuge 10 beim Einfahren in die Übergabestelle 100 auf einer Transporthilfe 102 gefahren werden. Dabei kann es sich um eine Art Transportpalette handeln, mit denen die Transportvorrichtung 4 das Elektrofahrzeug 10 anheben und auf den vorgesehenen Stellplatz 3, 31, 32, 33 platzieren kann. Auch die Transportvorrichtung 4 kann ebenso wie die Ladevorrichtungen 5, 52 durch die Ladesteuerung 6 gesteuert werden, was durch den gestrichelten Pfeil angedeutet ist.

Die auf den ersten oder zweiten Stellplätzen 31, 32 befindlichen Fahrzeuge 10 können mit der jeweiligen Ladevorrichtung 5, 52 geladen werden.

Die Übermittlung der Ladeanforderung kann beispielsweise über ein Bedienterminal 101, vorzugsweise angeordnet in der Nähe der Übergabestelle 100, geschehen. Alternativ kann die Ladeanforderung auch über eine Funkverbindung mit dem Elektrofahrzeug 10, angedeutet über eine Antenne des Elektrofahrzeugs 10, oder beispielsweise über eine Smartphone Anwendung an die Ladesteuerung 6 übermittelt werden.

Zusammenfassend betrifft die Erfindung eine Parkvorrichtung aufweisend eine Vielzahl von Stellplätzen eine Transportvorrichtung eine Ladevorrichtung für das Laden eines Elektrofahrzeugs und eine Ladesteuerung, wobei die Transportvorrichtung für das Transportieren des Elektrofahrzeugs zwischen den Stellplätzen ausgebildet ist. Zur Verbesserung der Parkvorrichtung hinsichtlich der Lademöglichkeiten für Elektrofahrzeuge wird vorgeschlagen, dass die Ladevorrichtung in der Umgebung eines ersten Stellplatzes der Stellplätze derart angeordnet ist, dass das Elektrofahrzeug auf dem ersten Stellplatz mittels der Ladevorrichtung aufladbar ist, wobei mittels der Ladesteuerung eine Anforderung zum Laden des in der Parkvorrichtung befindlichen Elektrofahrzeugs erfassbar ist. Ferner betrifft die Erfindung ein Verfahren zum Betreiben einer derartigen Parkvorrichtung, wobei sich in der Parkvorrichtung mindestens ein Elektrofahrzeug befindet, für das der Ladesteuerung eine Anforderung zum Laden übermittelt wurde, wobei nach Übermittlung der Anforderung das Elektrofahrzeug mittels der Transportvorrichtung zum ersten Stellplatz transportiert und an dem ersten Stellplatz mittels der Ladevorrichtung geladen wird.

## Patentansprüche

1. Parkvorrichtung (1) aufweisend
- eine Vielzahl von Stellplätzen (3)
- eine Transportvorrichtung (4)
- eine Ladevorrichtung (5) für das Laden eines Elektrofahrzeugs (10) und
- eine Ladesteuerung (6),
wobei die Transportvorrichtung (4) für das Transportieren des Elektrofahrzeugs zwischen den Stellplätzen (3) ausgebildet ist, wobei die Ladevorrichtung (5) in der Umgebung eines ersten Stellplatzes (31) der Stellplätze (3) derart angeordnet ist, dass das Elektrofahrzeug (10) auf dem ersten Stellplatz (31) mittels der Ladevorrichtung (5) aufladbar ist, wobei mittels der Ladesteuerung (6) eine Anforderung zum Laden des in der Parkvorrichtung (1) befindlichen Elektrofahrzeugs (10) erfassbar ist, **dadurch gekennzeichnet, dass** Z die Parkvorrichtung (1) mindestens zwei Ladevorrichtungen (5) umfasst, von denen sich zwei der mindestens zwei Ladevorrichtungen (5) in ihrer Leistungsfähigkeit unterscheiden.

2. Parkvorrichtung (1) nach Anspruch 1, wobei mittels der Ladesteuerung (6) der Ladezustand des Elektrofahrzeugs (10) und/oder die voraussichtliche Parkdauer und/oder die zu übertragende Energiemenge erfassbar ist.

3. Verfahren zum Betreiben einer Parkvorrichtung (1) nach einem der Ansprüche 1 oder 2, wobei sich in der Parkvorrichtung (1) mindestens ein Elektrofahrzeug (10) befindet, für das der Ladesteuerung (6) eine Anforderung zum Laden übermittelt wurde, wobei nach Übermittlung der Anforderung das Elektrofahrzeug (10) mittels der Transportvorrichtung (4) zum ersten Stellplatz (31) transportiert und an dem ersten Stellplatz (31) mittels der Ladevorrichtung (5) geladen wird.

4. Verfahren nach Anspruch 3, wobei nach Beendigung des Ladevorgangs das Elektrofahrzeug (10) mittels der Transportvorrichtung (4) auf einen weiteren Stellplatz (33) der Stellplätze (3) transportiert wird, wobei der weitere Stellplatz (33) als Lagerplatz ausgebildet ist.

5. Verfahren nach einem der Ansprüche 3 oder 4, wobei bei Übermittlung der Ladeanforderung eine Information über den Ladezustand und/oder der voraussichtlichen Parkdauer und/oder zu übertragende Energiemenge übermittelt wird.

6. Verfahren nach Anspruch 5, wobei die Parkvorrichtung (1) eine weitere Ladevorrichtungen (52) umfasst, wobei die weitere Ladevorrichtung (52) in der Umgebung eines zweiten Stellplatzes (32) der Stellplätze (3) derart angeordnet ist, dass ein auf dem zweiten Stellplatz (32) befindliches Elektrofahrzeug (10) mittels der weiteren Ladevorrichtung (32) aufladbar ist, wobei sich die Leistungsfähigkeit der Ladevorrichtung (5) und die Leistungsfähigkeit der weiteren Ladevorrichtung (52) unterscheiden, wobei abhängig von der Information über den Ladezustand und/oder der voraussichtlichen Parkdauer und/oder der zu übertragenden Energiemenge ermittelt wird, zu welchem Stellplatz (3) das Elektrofahrzeug (10) mittels der Transportvorrichtung (4) transportiert wird.

7. Verfahren nach einem der Ansprüche 5 oder 6, wobei eine erste Anzahl an Elektrofahrzeugen (10) jeweils eine Ladeanforderung an die Ladesteuerung (6) übermittelt hat, wobei die erste Anzahl größer ist als die Anzahl der Ladevorrichtungen (5) der Parkvorrichtung (1), wobei in Abhängigkeit von der Information über den Ladezustand und/oder der voraussichtlichen Parkdauer und/oder der zu übertragenden Energiemenge und/oder aus der Information über den Zeitpunkt der Übermittlung der Ladeanforderung eine Reihenfolge für die Elektrofahrzeuge (10), die jeweils eine Ladeanforderung an die Ladesteuerung (6) übermittelt haben, ermittelt wird, in der die Elektrofahrzeuge (10) geladen werden.

8. Verfahren nach einem der Ansprüche 5 bis 7, wobei in Abhängigkeit von der Information über den Ladezustand und/oder der voraussichtlichen Parkdauer und/oder der zu übertragenden Energiemenge und/oder aus der Information über den Zeitpunkt der Übermittlung der Ladeanforderung die Ladedauer für die jeweiligen Elektrofahrzeuge (10) ermittelt wird.

9. Verfahren nach einem der Ansprüche 7 oder 8, wobei die Ermittlung der Reihenfolge und/oder die Ermittlung der Ladedauer bei Eintreffen einer weiteren Ladeanforderung neu durchgeführt wird.

## Claims

1. Parking apparatus (1) having
- a large number of parking spaces (3)
- a transport apparatus (4)
- a charging apparatus (5) for charging an electric vehicle (10) and
- a charging controller (6),
wherein the transport apparatus (4) is embodied for transporting the electric vehicle between the parking spaces (3), wherein the charging apparatus (5) is arranged in the surrounding area of a first parking space (31) of the parking spaces (3) in such a manner that the electric vehicle (10) can be charged at the first parking space (31) by means of the charging apparatus (5), wherein a request for charging the electric vehicle (10) located in the parking apparatus (1) can be detected by means of the charging controller (6), **characterised in that** the parking apparatus (1) comprises at least two charging apparatuses (5), of which two of the at least two charging apparatuses (5) differ in their performance capability.

2. Parking apparatus (1) according to claim 1, wherein by means of the charging controller (6) it is possible to detect the charging state of the electric vehicle (10) and/or the expected parking duration and/or the amount of energy transferred.

3. Method for operating a parking apparatus (1) according to one of claims 1 or 2, wherein at least one electric vehicle (10) is located in the parking apparatus (1), for which electric vehicle (10) a request for charging has been transmitted to the charging controller (6), wherein once the request has been transmitted the electric vehicle (10) is transported to the first parking space (31) by means of the transport apparatus (4) and is charged at the first parking space (31) by means of the charging apparatus (5).

4. Method according to claim 3, wherein once the charging procedure has finished, the electric vehicle (10) is transported to a further parking space (33) of the parking spaces (3) by means of the transport apparatus (4), wherein the further parking space (33) is embodied as a storage space.

5. Method according to one of claims 3 or 4, wherein when the charging request is transmitted, an item of information regarding the charging state and/or the expected parking duration and/or amount of energy to be transferred is transmitted.

6. Method according to claim 5, wherein the parking apparatus (1) comprises a further charging apparatus (52), wherein the further charging apparatus (52) is arranged in the surrounding area of a second parking space (32) of the parking spaces (3) in such a manner that an electric vehicle (10) located at the second parking space (32) can be charged by means of the further charging apparatus (32), wherein the performance capability of the charging apparatus (5) and the performance capability of the further charging apparatus (52) differ, wherein, as a function of the information regarding the charging state and/or the expected parking duration and/or the amount of energy to be transferred, it is ascertained, to which parking space (3) the electric vehicle (10) is transported by means of the transport apparatus (4).

7. Method according to one of claims 5 or 6, wherein a first number of electric vehicles (10) have in each case transmitted a charging request to the charging controller (6), wherein the first number is greater than the number of charging apparatuses (5) of the parking apparatus (1), wherein as a function of the information regarding the charging state and/or the expecting parking duration and/or the amount of energy to be transferred, and/or from the information regarding the point in time at which the charging request was transmitted, an order is ascertained for the electric vehicles (10) that have in each case transmitted a charging request to the charging controller (6), in which the electric vehicles (10) are charged.

8. Method according to one of claims 5 to 7, wherein, as a function of the information regarding the charging state and/or the expected parking duration and/or the amount of energy transferred, and/or from the information regarding the point in time at which the charging request was transmitted, the charging duration is ascertained for the respective electric vehicles (10).

9. Method according to one of claims 7 or 8, wherein the ascertaining of the order and/or the ascertaining of the charging duration is performed when a further charging request arrives.

## Revendications

1. Installation (1) de stationnement, comportant
- une pluralité d'emplacements (3) de stationnement
- un dispositif (4) de transport
- un dispositif (5) de charge pour charger un véhicule (10) électrique et
- une commande (6) de charge,
dans laquelle le dispositif (4) de transport est constitué pour le transport du véhicule électrique entre les emplacements (3) de stationnement, le dispositif (5) de charge étant disposé dans l'environnement d'un premier emplacement (31) de stationnement parmi les emplacements (3) de stationnement, en ce que le véhicule (10) électrique peut être chargé sur le premier emplacement (31) de stationnement au moyen du dispositif (5) de charge, dans laquelle, au moyen de la commande (6) de charge, une demande de charge du véhicule (10) électrique se trouvant dans l'installation (1) de stationnement peut être détectée, **caractérisée en ce que**
l'installation (1) de stationnement comprend au moins deux dispositifs (5) de charge, dont deux des au moins (2) dispositifs (5) de charge sont différents par leur capacité.

2. Installation (1) de stationnement suivant la revendication 1, dans laquelle, au moyen de la commande (6) de charge, l'état de charge du véhicule (10) électrique et/ou la durée de stationnement prévisible et/ou la quantité d'énergie à transmettre peut être détectée.

3. Procédé pour faire fonctionner une installation (1) de stationnement suivant l'une des revendications 1 ou 2, dans lequel dans l'installation (1) de stationnement se trouve au moins un véhicule (10) électrique, pour lequel il a été transmis à la commande (6) de charge une demande de charge, dans lequel, après la transmission de la demande, le véhicule (10) électrique est transporté au moyen du dispositif (4) de transport au premier emplacement (31) de stationnement et est chargé au premier emplacement (31) de stationnement au moyen du dispositif (5) de charge.

4. Procédé suivant la revendication 3, dans lequel, après que l'opération de charge du véhicule (10) électrique est achevée, on le transporte au moyen du dispositif (4) de transport à un autre emplacement (3) de stationnement parmi les emplacements (3) de stationnement, un autre emplacement (3) de stationnement étant constitué en emplacement de stockage.

5. Procédé suivant l'une des revendications 3 ou 4, dans lequel, à la transmission de la demande de charge, on transmet une information sur l'état de charge et/ou la durée de stationnement prévisible et/ou la quantité d'énergie à transmettre.

6. Procédé suivant la revendication 5, dans lequel l'installation (1) de stationnement comprend un autre dispositif (52) de charge, l'autre dispositif (52) de charge étant disposé dans l'environnement d'un deuxième emplacement (32) de stationnement parmi les emplacements (3) de stationnement, de manière à ce qu'un véhicule (10) électrique se trouvant sur le deuxième emplacement (32) de stationnement puisse être chargé au moyen de l'autre dispositif (32) de charge, la capacité du dispositif (5) de charge et la capacité de l'autre dispositif (52) de charge étant différentes, dans lequel, en fonction de l'information sur l'état de charge et/ou la durée de stationnement prévisible et/ou la quantité d'énergie à transmettre, on détermine l' emplacement (3) où le véhicule (10) électrique est transporté au moyen du dispositif (4) de transport.

7. Procédé suivant l'une des revendications 5 ou 6, dans lequel un premier nombre de véhicules (10) électriques a transmis respectivement une demande de charge à la commande (6) de charge, le premier nombre étant plus grand que le nombre des dispositifs (5) de charge de l'installation (1) de stationnement, dans lequel, en fonction d'information sur l'état de charge et/ou la durée de stationnement prévisible et/ou la quantité d'énergie à transmettre et/ou à partir de l'information sur l'instant de la transmission de la demande de charge, on détermine une suite des véhicules (10) électriques, qui ont transmis respectivement une demande de charge à la commande (6) de charge, suite suivant laquelle les véhicules (10) électriques sont chargés.

8. Procédé suivant l'une des revendications 5 à 7, dans lequel en fonction de l'information sur l'état de charge et/ou la durée de stationnement prévisible et/ou la quantité d'énergie à transmettre et/ou de l'information sur l'instant de la transmission de la demande de charge, on détermine la durée de charge des véhicules (10) électriques respectifs.

9. Procédé suivant l'une des revendications 7 ou 8, dans lequel on effectue à nouveau la détermination de la suite et/ou la détermination de la durée de charge à l'arrivée d'une autre demande de charge.
